# EUROPEAN PATENT APPLICATION

(11) **EP 0 994 079 A2**
(43) Date of publication of application: **19.04.2000**
(21) Application number: 99307982.1
(22) Date of filing: 11.10.1999
(51) Int. Cl.: C03B 37/04, C03B 37/075, D04H 3/00

(54) **Method and apparatus for forming single-glass and dual-glass fibers and an insulation product formed from such fibers**

(30) Priority: 13.10.1998 US 170422
(71) Applicant: OWENS CORNING, Toledo, Ohio 43659 (US)
(72) Inventor: Watton, William A., Pickerington, Ohio 43147 (US); Houpt, Ronald A., Westerville, Ohio 43081 (US); Potter, Russell M., Hebron, Ohio 43025 (US); Berdan, Clarke, Granville, Ohio 43023 (US); Aschenbeck, David P., Newark, Ohio 43055 (US)
(74) Representative: West, Alan Harry

(57) **Abstract**

A method and apparatus are provided for making single and dual component fibers and for collecting such fibers so as to form a glass fiber insulation product (30). A spinner (60) is provided having first and second orifices (90, 92). Two distinct glass compositions are supplied to the spinner (60). The spinner (60) is rotated so as to centrifuge from the first orifices (90) irregularly shaped dual-glass fibers and from the second orifices (92) single-glass fibers. The single-glass and dual-glass fibers (76) are then collected as a wool pack (20) to form an insulation product (30). An insulation product (30) formed from single and dual component fibers also forms part of the present invention.

## Description

### BACKGROUND OF THE INVENTION

This invention relates to a method and apparatus for manufacturing single and dual component fibers from thermoplastic materials and products formed from such fibers, and more particularly to a method and apparatus for centrifuging single and dual component fibers from two streams of molten thermoplastic materials such as glass or other materials and products formed from those fibers.

Fibers of glass and other thermoplastic materials are useful in a variety of applications including acoustical or thermal insulation materials. Common prior art methods for producing glass fiber insulation products involve producing glass fibers from a rotary process. A single molten glass composition is forced through the orifices in the outer wall of a centrifuge commonly known as a spinner, producing primarily short, straight glass fibers. The fibers are drawn downward by a blower. A binder required to bond the fibers into a wool product is sprayed onto the fibers as they are drawn downward. The fibers are then collected and formed into a wool pack.

A modification of conventional glass fibers, which are usually straight fibers, is the use of fibers which are curly (helical) in shape. These fibers can be made by joining two distinct glass streams, commonly referred to as the A glass and B glass streams, and centrifuging the dual glass stream into a curly (helical) fiber.

Stalego, U.S. Pat. No. *2,998,620*, discloses curly (helical) glass fibers of bicomponent glass compositions. Stalego discloses producing staple curly fibers by passing two glass compositions having differing coefficients of thermal expansion through the orifices of a spinner. The glasses are extruded as a dual glass stream in aligned integral relationship such that the fibers curl naturally upon cooling due to the differences in their coefficients of thermal expansion. Stalego does not disclose insulation products made with curly glass fibers. Further, such fibers are not preferred for use in forming insulation products since it is believed that curly fibers do not spread and fill a given volume in a uniform manner.

Accordingly, a need exists for an improved wool insulating material with a uniform volume filling nature such that the wool insulating material has improved recovery and reduced thermal conductivity and can be employed without the use of a binder material.

### SUMMARY OF THE INVENTION

In accordance with the present invention, a method and apparatus are provided for simultaneously forming single and dual component fibers from thermoplastic materials such as glass or other materials. The dual-glass fibers have an irregular shape. Insulation products including irregularly shaped dual-glass fibers exhibit lower thermal conductivity, higher recovery ratios, and increased uniform volume filling capability.

For purposes of this patent specification, in using the terms "glass fibers" and "glass compositions," "glass" is intended to include any of the glassy forms of materials such as rock, slag, and basalt, as well as traditional glasses. Thermoplastic materials and thermoplastic fibers include, in addition to glass and other mineral fibers, fibers from polymer materials such as polyester fibers and polypropylene fibers.

In accordance with a first aspect of the present invention, an apparatus is provided for making single and dual component fibers. The apparatus comprises a spinner having a peripheral wall and a bottom wall, and further includes orifices in the peripheral wall for centrifuging single and dual component fibers. The spinner is divided into a series of compartments by baffles positioned interiorly of the spinner peripheral wall with the orifices communicating with the compartments. The spinner also includes a divider for directing the first molten thermoplastic material into alternate ones of the compartments and for directing the second molten thermoplastic material into the remaining ones of the compartments. The apparatus additionally includes equipment for supplying first and second molten thermoplastic materials to the spinner and a rotation mechanism for rotating the spinner so as to centrifuge single and dual component fibers through the peripheral wall orifices.

The orifices comprise first and second orifices. The spinner peripheral wall further comprises a plurality of first and second bores extending from the compartments, through the spinner peripheral wall and communicate with the first and second orifices such that the molten thermoplastic materials flow through the bores to the orifices in the peripheral wall. Pairs of adjacent ones of the first bores extend from adjacent ones of the compartments and communicating with one another and with the first orifices. The second bores extend from the alternate ones of the compartments, through the spinner peripheral wall and communicate with the second orifices.

The orifices may further comprise third orifices. The spinner peripheral wall may include a plurality of third bores which extend from the remaining ones of the compartments, through the spinner peripheral wall and communicate with the third orifices.

In one embodiment of the present invention, the first bore pairs extending from adjacent compartments join together in a V shape. Alternatively, the first bore pairs extending from adjacent compartments may join together in a Y shape.

The divider may include a generally horizontal flange positioned intermediate the spinner peripheral wall and a vertical interior wall positioned between the baffles and the flange. The vertical interior wall includes a plurality of first and second slots to allow the glass compositions to flow into the compartments.

In accordance with a second embodiment of the present invention, a method is provided for making a glass fiber insulation product. The method comprises the steps of: providing a spinner having first and second orifices; supplying two distinct glass compositions to the spinner, the two glass compositions having different coefficients of thermal expansion; rotating the spinner so as to centrifuge from the first orifices irregularly shaped dual-glass fibers and from the second orifices single-glass fibers; and collecting the single-glass and dual-glass fibers as a wool pack to form an insulation product.

In accordance with a third embodiment of the present invention, a glass fiber insulation product is formed. It comprises irregularly shaped dual-glass fibers and single-glass fibers. Preferably, the fibers are binderless.

The irregularly shaped dual-glass fibers may be formed from two distinct glass compositions having differing coefficients of thermal expansion. The difference between the coefficients of thermal expansion is preferably greater than about 2.0 ppm/°C (2.0x10⁻⁶/°C).

Each irregularly shaped dual-glass fiber has a rotation that varies irregularly along its length both in direction and in magnitude. Further, each is twisted in a unique way.

### BRIEF DESCRIPTION OF THE DRAWINGS

FIG. 1 is a schematic view in elevation of apparatus for making single and dual component fibers in accordance with the present invention;
FIG. 2 is a cross-sectional view in elevation of the fiberizer/spinner used in the practice of the invention;
FIG. 3 is a plan view, partly in section, of a portion of the spinner taken along line 3-3 in FIG. 2;
FIG. 4 is a view taken along line 4-4 in FIG. 3;
FIG. 5 is a partial cross-sectional view of a V-hole embodiment of the first orifices in the spinner; and
FIG. 6 is a perspective view taken from the interior of the spinner showing the divider and compartments for the A and B glasses.

### DETAILED DESCRIPTION AND PREFERRED EMBODIMENTS OF THE INVENTION

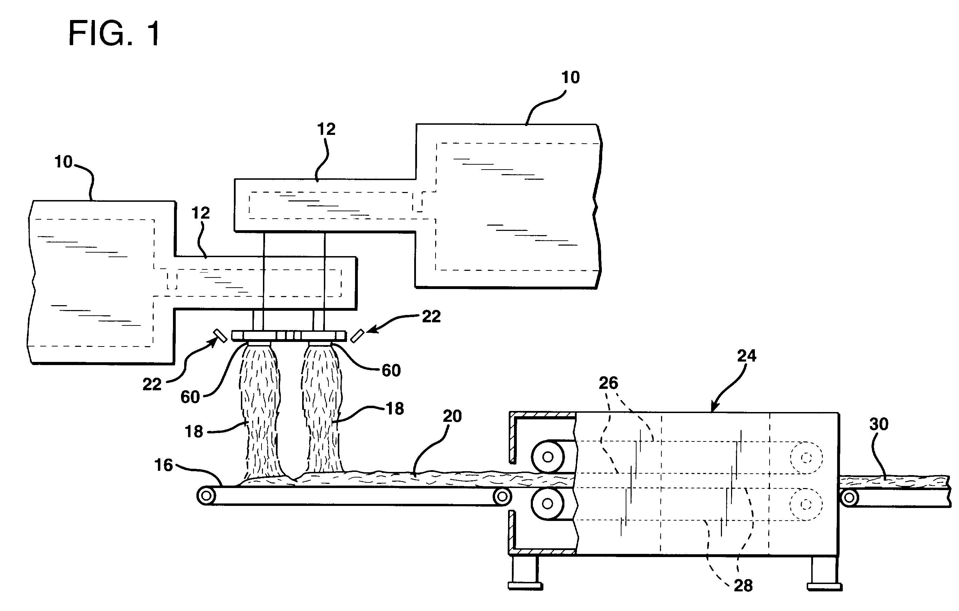

Insulation products of single and dual component fibers can be produced using a rotary fiber forming and heat setting process and apparatus as shown in Fig. 1.

Two distinct molten glass compositions (A glass and B glass) are supplied from any suitable source of glass such as furnaces 10 and forehearths 12 to rotary fiberizers 60. Preferably, the glasses have different mechanical attributes so that the dual component fibers, upon cooling, assume an irregular (as opposed to straight) configuration. Such different mechanical attributes may be, for example, differing coefficients of thermal expansion, differing melting points, differing viscosities, or differing mechanical strengths. The single component fibers will be substantially straight. Veils 18 of single and dual component fibers produced by the fiberizers are collected on conveyor 16 as wool pack 20 by means of a vacuum positioned beneath the conveyor (not shown). As the fibers are blown downwardly by air or gases to conveyor 16 by means of blowers 22 adjacent the fiberizers, they are attenuated and cooled.

The wool pack 20 may then optionally be passed through oven 24 at heat setting temperatures of from about 700 to 1000°F (371 to 593°C). The heat setting temperature may be achieved either by retarding the fiber cooling process after fiber forming to retain some of the heat from the fiber forming process, or by reheating the fibers in heat setting oven 24. While passing through the oven, wool pack 20 is shaped by top conveyor 26 and bottom conveyor 28, and by edge guides (not shown). While in oven 24, the glass fibers may be subjected to flows of hot gases to facilitate uniform heating. When the fibers are constrained by conveyors 26 and 28, the dual-component fibers are stressed in the manner of a compressed spring. When subjected to heat setting temperatures, the dual component fibers relax, reducing stress, so that the wool pack holds its desired shape. After a period of up to 10 minutes, the wool pack then exits oven 24 as insulation product 30.

It is to be understood that heat setting is an optional aspect of the present invention. Alternatively, the wool pack may be encapsulated with an exterior plastic layer as taught by Schelhorn et al., U.S. Pat. No. *5,277,955,* the disclosure of which is hereby incorporated by reference. Further, the wool pack may be subjected to other fabrication techniques including stitching, needling, or hydro-entanglement.

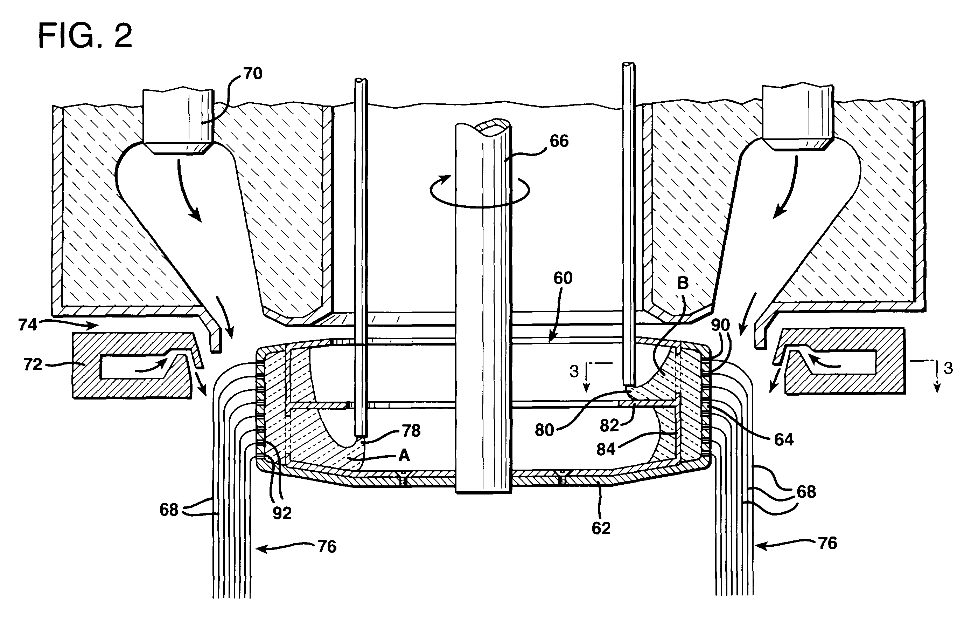

As shown in FIG. 2, each rotary fiberizer or spinner 60 includes a spinner bottom wall 62 and a spinner peripheral wall 64. The spinner is rotated on spindle 66, as is known in the art. The rotation of the spinner centrifuges molten glass through orifices 90 and 92 in spinner peripheral wall 64 to form single-glass and dual-glass primary fibers 68. The primary fibers 68 are maintained in a soft, attenuable condition by the heat of annular burner 70. An internal burner (not shown) may also be used to provide heat to the interior of spinner 60. Annular blower 72, using induced air through passage 74, is positioned to pull primary fibers 68 and further attenuate them into single-glass and dual-glass secondary fibers 76, suitable for use in wool insulating materials. The single-glass and dual-glass fibers 76 are then collected on a conveyor (as shown in FIG. 1) for formation into a wool pack.

The interior of spinner 60 is supplied with two separate streams of molten glass, first stream 78 containing glass A and second stream 80 containing glass B. The glass in stream 78 drops directly onto spinner bottom wall 62 and flows outwardly due to the centrifugal force toward spinner peripheral wall 64 to form a head of glass A as shown. Glass B in molten glass stream 80 is positioned closer to spinner peripheral wall 64 than stream 78, and the B glass in stream 80 is intercepted by horizontal flange 82 before it can reach the spinner bottom wall. Thus, a build-up or head of glass B is formed above horizontal flange 82 as shown.

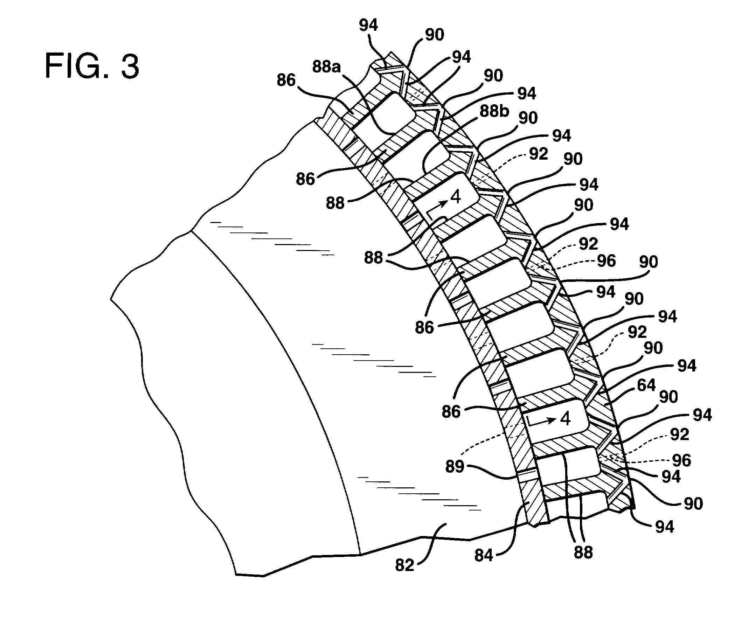

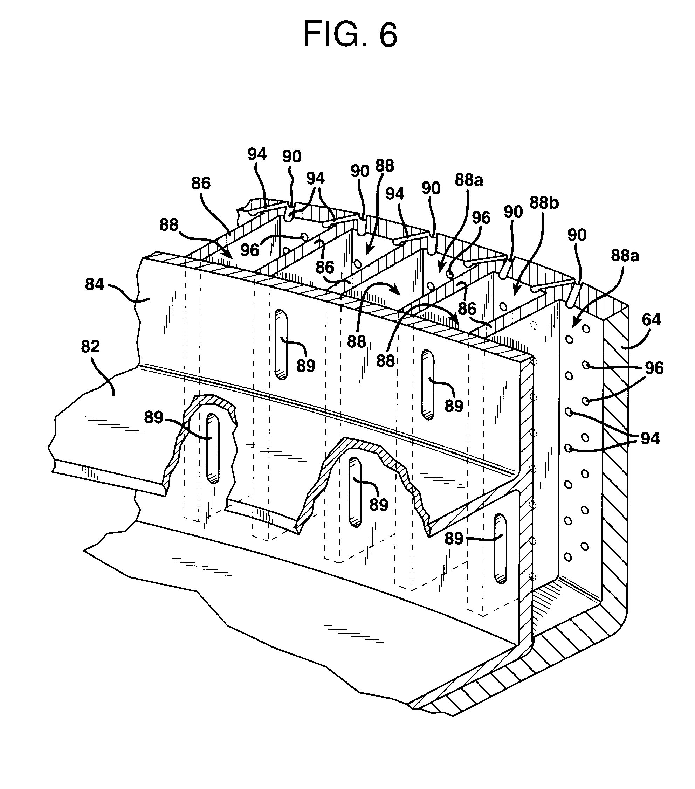

As best shown in FIGS. 3 and 6, the spinner 60 is adapted with a vertical interior wall 84 which is generally circumferential and positioned radially inwardly from the spinner peripheral wall 64. A series of vertical baffles 86, integral with the spinner peripheral wall 64 and located between the peripheral wall 64 and the vertical interior wall 84, divide that space into a series of generally vertically-aligned compartments 88 which runs substantially the entire height of spinner peripheral wall 64. First or alternate ones 88a of the compartments 88 contain glass A and second or remaining ones 88b of the compartments 88 contain glass B. The A and B glasses flow, respectively, into the compartments 88a and 88b through slots 89 in interior wall 84. It can be seen that the horizontal flange 82 and the vertical interior wall 84 together define a divider for directing glasses A and B into alternating adjacent compartments 88a and 88b so that every other compartment contains glass A while the remaining compartments contain glass B.

Spinner peripheral wall 64 has first orifices 90 and second orifices 92 formed in its outer surface. The first orifices 90 are positioned adjacent to, and in general alignment with, the radial outward edges of the vertical baffles 86. The second orifices 92 are aligned in vertical rows, wherein each row is positioned between two adjacent baffles 86 which define between them a first compartment 88a.

As can been seen in FIGS. 3-6, a series of first and second passages or bores 94 and 96 extend from the compartments 88a and 88b, through the peripheral wall 64 and communicate with the first and second orifices 90 and 92. Pairs of the first bores 94 are preferably located adjacent either side of the baffles 86 and are angled to communicate with one another and with the first orifices 90. Each pair of first bores 94 is V-shaped in the illustrated embodiment. Alternatively, each pair of first bores 94 may be Y-shaped or have another geometric shape.

As shown, the first passages 94 are generally vertically aligned and are preferably sized to provide equal flow lengths for the A and B glass components flowing from the adjacent first and second compartments 88a and 88b to the orifices 90. This ensures that when the A and B components exit orifices 90 in side-by-side relation, there will be approximately equal amounts of A and B glasses for each fiber. It will be recognized that if unequal amounts of A and B glasses are desired, the passages 94 may be sized to provide for unequal amounts of flow resulting in unequal proportions in the dual component fiber. Such a result may be desirable in certain instances. Additionally, the passages 94 extending from each compartment may vary in size to provide a variation in the ratios of A and B glasses in the dual component fibers formed.

In the illustrated embodiment, the second passages 96 extend from the first compartments 88a and communicate with the second orifices 92. Only A glass will flow out from the second orifices 92 during rotation of the spinner 60. Hence, only single-glass fibers comprising A glass will be formed from the glass streams exiting the orifices 92.

The slots 89 which communicate with the first compartments 88a may be formed larger than the slots 89 which communicate with the second compartments 88b so as to ensure that the first compartments 88a have an adequate supply of A glass material.

It is also contemplated that third orifices (not shown) may be formed in the outer surface of the spinner peripheral wall 64. The third orifices may be aligned in vertical rows, wherein each row is positioned between two adjacent baffles 86 which define a second compartment 88b between them. Third bores (not shown) may also be provided which extend from each second compartment 88b to a corresponding third orifice such that B glass flows from the second compartments 88b to the third orifices. Only B glass will flow from the third orifices during rotation of the spinner 60. Hence, only single-component fibers comprising B glass will be formed from the glass streams exiting the third orifices.

Typically, passages 94 and 96 will have diameters in the range of from about 0.010 to about 0.040 inches (0.25 to about 1.0 mm), and preferably from about 0.015 to about 0.025 inches (0.38 to about 0.63 mm). The number of passages formed depends on the height of the spinner peripheral wall. The number and size of the passages, as well as the flow rate of the molten glasses into compartments 88 is chosen to build up a "head" of molten material covering the passages in each compartment.

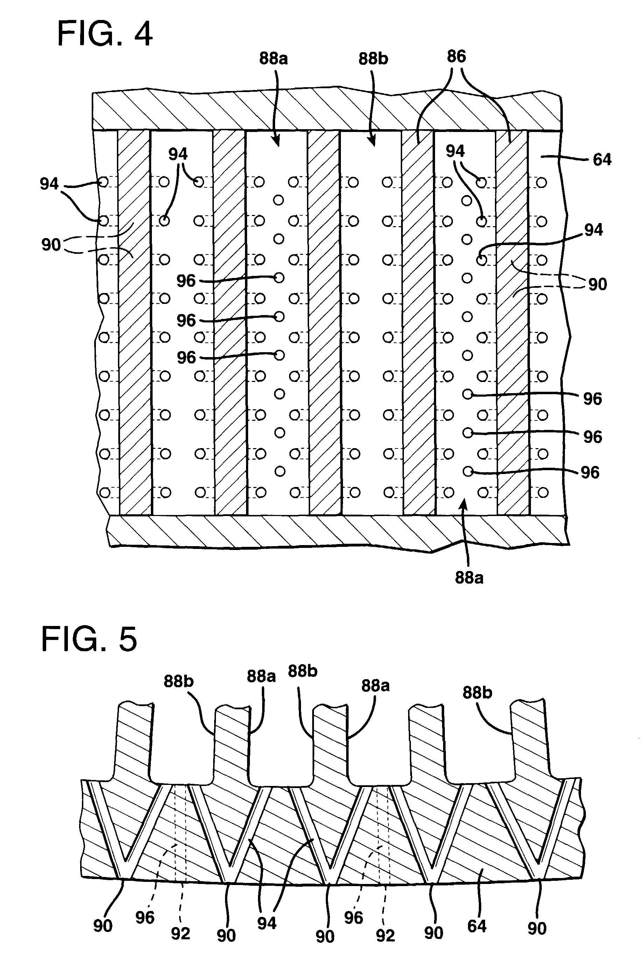

Orifices 90 and 92, and passages or bores 94 and 96 may be drilled into the spinner wall by any of several known drilling techniques such as laser drilling, electrical discharge milling (EDM), or electron beam drilling. As best shown in FIGS. 3 and 5, passages 94 are preferably drilled at an angle of from about 20° to about 45° from normal to the spinner peripheral wall.

The insulation product 30 formed in accordance with the present invention may comprise, by weight, from about 1% to about 99% irregularly shaped dual-glass fibers and, preferably, from about 20% to about 80% dual-glass fibers and, more preferably, from about 30% to about 70% dual-glass fibers. The balance of the product 30 comprises essentially straight, single-glass fibers. Preferably, a sufficient amount of dual-glass fibers are provided, e.g., an amount by weight greater than or equal to about 20%, such that the dual-glass fibers entangle sufficiently with one another and with the single-glass fibers so that binder material is not required to maintain sufficient wool pack integrity. By sufficient integrity, it is meant that the fibers of the product 30 will remain entangled and not separate when an 8 ft. (2.4 m) wool batt is suspended under its own weight either along its length or its width. However, a binder may be added to provide additional strength to the wool insulation material.

The dual-glass fibers preferably have the same characteristics as the irregularly shaped fibers described in U.S. Patent No. 5,536,550, the disclosure of which is incorporated herein by reference. As described in the '550 patent, each irregularly shaped dual-glass fiber has a rotation that varies irregularly along its length both in direction and in magnitude. Also, each is twisted in a unique way.

The A and B glass compositions used to form the single and dual component fibers may comprise those which are disclosed in the '550 patent. More specifically, the A glass may comprise a high-soda, low-borate lime-aluminosilicate composition and the B glass may comprise a high-borate, low-soda lime-aluminosilicate composition.

## Claims

1. Apparatus for making single and dual component fibers comprising:
a spinner having a peripheral wall and a bottom wall, and further including orifices in said peripheral wall for centrifuging single and dual component fibers, said spinner being divided into a series of compartments by baffles positioned interiorly of said spinner peripheral wall with said orifices communicating with said compartments;
equipment for supplying first and second molten thermoplastic materials to said spinner;
said spinner further including a divider for directing said first molten thermoplastic material into alternate ones of said compartments and for directing said second molten thermoplastic material into the remaining ones of said compartments; and
a rotation mechanism for rotating said spinner so as to centrifuge single and dual component fibers through said peripheral wall orifices.

2. An apparatus as set forth in claim 1, wherein said orifices comprise first and second orifices and said spinner peripheral wall further comprises a plurality of first and second bores extending from said compartments, through said spinner peripheral wall and communicating with said first and second orifices such that said molten thermoplastic materials flow through said bores to said orifices in said peripheral wall, pairs of adjacent ones of said first bores extending from adjacent ones of said compartments and communicating with one another and with said first orifices, and said second bores extending from said alternate ones of said compartments, through said spinner peripheral wall and communicating with said second orifices.

3. An apparatus as set forth in claim 2, wherein said orifices further comprise third orifices and said spinner peripheral wall further comprises a plurality of third bores extending from said remaining ones of said compartments, through said spinner peripheral wall and communicating with said third orifices.

4. An apparatus as set forth in claim 2, wherein said first bore pairs extending from adjacent compartments join together in a V shape.

5. An apparatus as set forth in claim 1, in which said divider includes a generally horizontal flange positioned intermediate said spinner peripheral wall and a vertical interior wall positioned between said baffles and said flange.

6. An apparatus as set forth in claim 5, wherein said vertical interior wall includes a plurality of first and second slots, said glass compositions flowing through said slots and into said compartments.

7. A method of making a glass fiber insulation product comprising the steps of:
providing a spinner having first and second orifices;
supplying two distinct glass compositions to said spinner, said two glass compositions having different coefficients of thermal expansion;
rotating said spinner so as to centrifuge from said first orifices irregularly shaped dual-glass fibers and from said second orifices single-glass fibers; and
collecting said single-glass and dual-glass fibers as a wool pack to form an insulation product.

8. A method as set forth in claim 7, wherein said fibers in said insulation product are binderless.

9. A method as set forth in claim 7, wherein said spinner comprises a peripheral wall and a bottom wall, and further including orifices in said peripheral wall for centrifuging single and dual component fibers, said spinner being divided into a series of compartments by baffles positioned interiorly of said spinner peripheral wall with said orifices communicating with said compartments, and said spinner including a divider for directing said first molten thermoplastic material into alternate ones of said compartments and for directing said second molten thermoplastic material into the remaining ones of said compartments.

10. A method as set forth in claim 9, wherein said orifices comprise first and second orifices and said spinner peripheral wall further comprises a plurality of first and second bores extending from said compartments, through said spinner peripheral wall and communicating with said first and second orifices such that said molten thermoplastic materials flow through said bores to said orifices in said peripheral wall, pairs of adjacent ones of said first bores extending from adjacent ones of said compartments and communicating with one another and with said first orifices, and said second bores extending from said alternate ones of said compartments, through said spinner peripheral wall and communicating with said second orifices.

11. A method as set forth in claim 10, wherein said first bore pairs extending from adjacent compartments join together in a V shape.

12. A method as set forth in claim 10, wherein said spinner further comprises third orifices and said step of rotating said spinner comprises the step of rotating said spinner so as to centrifuge from said first orifices irregularly shaped dual-glass fibers, from said second orifices first single-glass fibers, and from said third orifices second single-glass fibers.

13. A glass fiber insulation product comprising irregularly shaped dual-glass fibers and single-glass fibers.

14. A glass fiber insulation product as set forth in claim 13, wherein said dual-glass fibers and said single-glass fibers are binderless.

15. A glass fiber insulation product as set forth in claim 13, wherein said irregularly shaped dual-glass fibers are formed from two distinct glass compositions having different coefficients of thermal expansion.

16. A glass fiber insulation product as set forth in claim 15, wherein the difference between the coefficients of thermal expansion is greater than about 2.0 ppm/°C.

17. A glass fiber insulation product as set forth in claim 13, wherein each irregularly shaped dual-glass fiber has a rotation that varies irregularly along its length both in direction and in magnitude.

18. A glass fiber insulation product comprising irregularly shaped dual-glass fibers and single-glass fibers, wherein at least a substantial portion of each of said irregularly shaped fibers is twisted in a unique way.

19. A glass fiber insulation product as set forth in claim 18, wherein the dual-glass fibers and the single-glass fibers are binderless.

20. A glass fiber insulation product as set forth in claim 18, wherein said dual-glass fibers are made from A and B glasses, said A glass comprises a high-soda, low-borate lime-aluminosilicate composition and said B glass comprises a high-borate, low-soda lime-aluminosilicate composition.
